# EUROPÄISCHE PATENTANMELDUNG

(11) **EP 4 730 107 A1**
(43) Veröffentlichungstag der Anmeldung: **22.04.2026**
(21) Anmeldenummer: 24207523.2
(22) Anmeldetag: 18.10.2024
(51) Int. Cl.: G06F 8/41, G06N 3/04, G06N 3/10

(54) **VERFAHREN UND VORRICHTUNG ZUR SPEICHERPLANUNG FÜR EINE CODE-GENERIERUNG ZUM ERSTELLEN EINES PROGRAMMCODES ZUR BERECHNUNG EINES KÜNSTLICHEN NEURONALEN NETZES IN EINER HARDWAREUMGEBUNG**

(71) Anmelder: Robert Bosch GmbH, 70442 Stuttgart (DE)
(72) Erfinder: Hjort, Ulrik, 21113 Malmö (SE); Vo, Duy Khoi, 70469 Stuttgart (DE); Wagner, Benjamin, 88045 Friedrichshafen (DE); Boblest, Sebastian, 73105 Duernau (DE); Sulaiman, Leif, 22477 Lund (SE); Lochmann, Markus, 72762 Reutlingen (DE)

(57) **Zusammenfassung**

Die Erfindung betrifft ein computer-implementiertes Verfahren zum Durchführen einer Speicherplanung für eine Code-Generierung zur Bestimmung eines Codes für die Berechnung eines neuronalen Netzes in einer Hardwareumgebung (2), mit folgenden Schritten:
- Bereitstellen (S1) von aufeinanderfolgenden Berechnungsschritten von Schichten des neuronalen Netzes, wobei für jeden Berechnungsschritt (O1) die Größe eines Eingangsdatenblocks (EB), eines Ausgangsdatenblocks (AB) und, abhängig von der Art des Berechnungsschritts, eines oder mehrerer Modellparameterblöcke (MB1, MB2, MB3) bestimmt ist, wobei der eine oder die mehreren Modellparameterblöcke (MB1, MB2, MB3) Modellparameter für einen jeweiligen Berechnungsschritt aufweisen,
- Ermitteln einer Regel für die Speicherplanung für jeden bestimmten Berechnungsschritt, der die Verwendung von Modellparametern benötigt, wobei die Regel angibt, dass die Modellparameter in einen zusammenhängenden Speicherbereich in einen Arbeitsspeicher der Hardwareumgebung geladen werden;
- Durchführen (S2) einer Speicherplanung, in der für jeden Berechnungsschritt der Speicherbereich des jeweiligen Eingangsdatenblocks (EB), Ausgangsdatenblocks (AB) und Modellparameterblocks (MB1, MB2, MB3) im Arbeitsspeicher festgelegt wird, unter Berücksichtigung der ermittelten Regeln.

## Beschreibung

### Technisches Gebiet

Die Erfindung betrifft die Implementierung eines Programmcodes auf einer Hardwareumgebung, wie sie beispielsweise als Mikrocontrollergesteuerte Steuergeräte und dergleichen vorkommt. Die Erfindung betrifft weiterhin Verfahren zur Speicherplanung zum Handling von Eingangsdaten, Ausgangsdaten und Modellparametern.

### Technischer Hintergrund

Bestimmte Hardwareumgebungen, wie beispielsweise Mikrocontroller in Steuergeräten, erfordern die Erstellung eines angepassten ausführbaren Programmcodes, um die Eigenheiten und Beschränkungen der bestimmten Hardwareumgebung zu berücksichtigen. So können insbesondere die verfügbare Speichergröße des Arbeitsspeichers, auf die der Mikrocontroller oder eine Beschleunigungshardware direkt zugreifen kann, beschränkt sein oder Speicherverschiebe- oder -kopieroperationen von einem Datenspeicher, wie z.B. einem Flash- oder externen Speicher, auf den Arbeitsspeicher hardwarebedingt besonders aufwendig sein.

Die Berechnungsschritte für die Berechnung von entsprechenden Netzwerkschichten von neuronalen Netzen können einen erheblichen Speicherbedarf benötigen, da für jeden Berechnungsschritt ein Eingangsdatenblock, ein Modellparameterblock und ein Ausgangsdatenblock abrufbar und von dem Mikrocontroller nutzbar in dem Arbeitsspeicher gespeichert werden muss.

Bestehende Code-Generatoren legen während der Speicherplanung fest, in welchem Bereich des Arbeitsspeichers die pro Berechnungsschritt benötigten Datenblöcke im Speicher abgelegt werden. Während der Speicherplanung wird neben der Zuordnung der Eingangsdatenblöcke, der Ausgangsdatenblöcke und ggfs. der Modellparameter zu Speicherbereichen des Arbeitsspeichers auch den Daten, die während der Berechnung in einem Berechnungsschritt entstehen, ein entsprechender Speicherbereich zugewiesen.

Herkömmliche Code-Generatoren für neuronale Netze gehen üblicherweise nicht von einem beschränkten Arbeitsspeicher aus und weisen in der Regel distinkte Speicherbereiche zum Speichern der Eingangsdatenblöcke, Netzwerkparameterblöcke und Ausgangsdatenblöcke für jeden der aufeinanderfolgend berechneten Berechnungsschritte zu. Bisher ist es daher üblich, die Modellparameter frei im verfügbaren Speicher zu verteilen, um den Gesamtbedarf an Speicher zu minimieren. Dieses Vorgehen kann jedoch dazu führen, dass vor der Ausführung des Berechnungsschritts die Modellparameter abschnittsweise in verschiedene Speicherbereiche des Arbeitsspeichers kopiert werden müssen.

Insbesondere das Kopieren von Speicherbereichen von dem Datenspeicher in einen Arbeitsspeicher als auch zwischen Speicherbereichen in dem Arbeitsspeicher ist in der Regel eine zeitaufwändige Speicheroperation, so dass die Speicherplanung das Ziel haben muss, die durch die Ausführungszeit von Speicheroperationen bedingte Gesamtrechenzeit zu verringern.

Es ist Aufgabe der vorliegenden Erfindung, ein verbessertes Speichermanagement für die Berechnung von künstlichen neuronalen Netzen zur Verfügung zu stellen, bei der die Zahl von Speicheroperationen reduziert werden kann.

### Offenbarung der Erfindung

Diese Aufgabe wird durch das Verfahren zum Durchführen einer Speicherplanung für eine Code-Generierung eines Codes für die Berechnung eines neuronalen Netzes gemäß Anspruch 1 sowie durch die Vorrichtung gemäß dem nebengeordneten Anspruch gelöst.

Weitere Ausgestaltungen sind in den abhängigen Ansprüchen angegeben.

Gemäß einem ersten Aspekt ist ein computer-implementiertes Verfahren zum Durchführen einer Speicherplanung für eine Code-Generierung zur Bestimmung eines Codes für die Berechnung eines neuronalen Netzes in einer Hardwareumgebung, mit folgenden Schritten:
- Bereitstellen von aufeinanderfolgenden Berechnungsschritten von Schichten des neuronalen Netzes, wobei für jeden Berechnungsschritt die Größe eines Eingangsdatenblocks, eines Ausgangsdatenblocks und, abhängig von der Art des Berechnungsschritts, eines oder mehrerer Modellparameterblöcke bestimmt ist, wobei der eine oder die mehreren Modellparameterblöcke Modellparameter für einen jeweiligen Berechnungsschritt aufweisen,
- Ermitteln einer Regel für die Speicherplanung für jeden bestimmten Berechnungsschritt, der die Verwendung von Modellparametern benötigt, wobei die Regel angibt, dass die Modellparameter in einen zusammenhängenden Speicherbereich in einen Arbeitsspeicher der Hardwareumgebung geladen werden;
- Durchführen einer Speicherplanung, in der für jeden Berechnungsschritt der Speicherbereich des jeweiligen Eingangsdatenblocks, Ausgangsdatenblocks und Modellparameterblocks im Arbeitsspeicher festgelegt wird, unter Berücksichtigung der ermittelten Regeln.

Insbesondere kann das Durchführen der Speicherplanung das Anwenden eines Optimierungsverfahrens umfassen, bei der die Zielfunktion eine Minimierung der Anzahl der Speicheroperationen berücksichtigt. Weiterhin kann das Durchführen der Speicherplanung das Anwenden eines Optimierungsverfahrens umfassen, bei der die Zielfunktion eine Minimierung des Gesamtspeicherbedarfs im Arbeitsspeicher berücksichtigt.

Die einzelnen Berechnungsschritte zur Berechnung von Berechnungsschichten eines neuronalen Netzes werden in der Regel auf einer Hardwareumgebung seriell berechnet. Das bedeutet, dass der generierte Code für die Hardwareumgebung eine Reihenfolge festlegt, in der die Eingangsdaten verarbeitet und die Ausgangsdaten des jeweiligen Berechnungsschritts erzeugt werden. Jeder Berechnungsschritt entnimmt die Eingangsdaten aus einem Eingangsdatenblock und speichert die resultierenden Ausgangsdaten in einem oder mehreren Ausgangsdatenblöcken. Eingangsdatenblock und Ausgangsdatenblock stellen Speicherbereiche des Arbeitsspeichers dar, die innerhalb eines zusammenhängenden Adressraums angeordnet sind.

Die Hardwareumgebung umfasst eine Recheneinheit, einen Arbeitsspeicher und einen Datenspeicher. Ein generierter Code zur Berechnung eines neuronalen Netzes wird in Form der Berechnungsschritte in der Recheneinheit ausgeführt, wobei Eingangsdatenblöcke und Ausgangsdatenblöcke in dem Arbeitsspeicher zum Bereitstellen der Eingangsdaten und zum Speichern der Ausgangsdaten verwendet werden. Ein Zugriff auf Daten aus dem Arbeitsspeicher hat kurze Zugriffszeiten, während ein Zugriff auf den Datenspeicher längere Zugriffszeiten benötigt. Eine Speicherplanung hat das Ziel, durch Bereitstellen und Platzieren der Eingangsdatenblöcke und Ausgangsdatenblöcke in dem Arbeitsspeicher die Zugriffszeiten bzw. die gesamte Berechnungsdauer zu reduzieren und gleichzeitig den maximal verfügbaren Speicherplatz des Arbeitsspeichers zu berücksichtigen oder zu beschränken.

Je nach Berechnungsschritten, die zum Berechnen eines neuronalen Netzes ausgeführt werden müssen, treten zwischen den eigentlichen Schichtberechnungen häufig Speicheroperationen auf, die ein Kopieren in den Arbeitsspeicher oder Verschieben von Speicherbereichen innerhalb des Arbeitsspeichers beinhalten. Die Speicheroperationen sind häufig zeitintensiv und weisen zudem einen signifikanten Zeitanteil auf, der nicht von der Größe des zu kopierenden oder zu verschiebenden Speicherbereichs abhängt.

Der Kern des obigen Verfahrens besteht darin, die Modellparameter als zusammenhängenden Datenblock in einer Speicheroperation zu planen. Auf diese Weise wird nur eine einzelne Kopieroperation benötigt, um alle Modellparameter in dem Arbeitsspeicher verfügbar zu machen. Dies erhöht die Ausführungsgeschwindigkeit des neuronalen Netzes durch die Reduzierung der benötigten Speicheroperationen.

Neben den Eingangsdatenblöcken oder Ausgangsdatenblöcken der einzelnen Berechnungsschichten des neuronalen Netzes werden während der Speicherplanung auch die Speicherbereiche zugeordnet. Den Parametern, die für die Berechnung mancher Berechnungsschichten verwendet werden, werden ebenfalls Speicherbereich im Arbeitsspeicher zugewiesen.

Die Speicherplanung sieht allgemein vor, den Gesamtspeicherbedarf im Arbeitsspeicher zu minimieren. Dies hat jedoch den Nebeneffekt, dass bei der Ausführung der Berechnung einer Netzwerkschicht die Modellparameter der Berechnungsschicht abschnittweise in den Arbeitsspeicher kopiert werden, insbesondere wenn die verfügbaren Speicherbereiche zwischen bereits platzierten Eingangsdatenblöcken und Ausgangsdatenblöcken kleiner sind als der in den Arbeitsspeicher zu kopierende Modellparameterblock.

Abhängig von der Hardwareumgebung können Speicherzugriffe, wie beispielsweise Kopieroperationen, Verschiebeoperationen und dergleichen einen hohen Einfluss auf die Gesamtverarbeitungszeit haben, so dass es wünschenswert ist, die Anzahl der benötigten Kopieroperationen zu minimieren. Insbesondere kann bei der Speicherplanung der maximal verfügbare Speicherbereich berücksichtigt werden.

Die Speicherplanung kann nun entscheiden, ob unter Berücksichtigung der Größe des Eingangsdatenblocks und Ausgangsdatenblocks jedes der Berechnungsschritte die Netzparameter für einen oder mehrere Berechnungsschritte in den Arbeitsspeicher kopiert werden können. Dabei wird versucht, die Netzparameter von verschiedenen Parameterblöcken möglichst zusammenhängend in den Arbeitsspeicher zu schreiben, da dadurch nur eine einzige Kopieroperation notwendig ist. Dies kann in der Hardwareumgebung einen erheblichen Zeitgewinn bei der Verarbeitung der bei der Auswertung des neuronalen Netzes mit sich bringen, insbesondere dann, wenn eine Kopieroperation von Daten in einen Arbeitsspeicher aufwendig ist und insbesondere einen hohen Offset-Anteil an Verarbeitungszeit aufweist, d. h. einen Anteil an Verarbeitungszeit, die nicht durch die Größe des zu kopierenden Speicherbereichs beeinflusst ist.

Nach der Speicherplanung kann eine Code-Generierung durchgeführt werden, bei die Modellparameter in einer einzigen Kopieroperation in den Speicherbereich, der durch die Speicherplanung dem Modellparameterblock zugewiesen wurden, geladen werden.

### Kurzbeschreibung der Zeichnungen

Ausführungsformen werden nachfolgend anhand der beigefügten Zeichnungen näher erläutert. Es zeigen:
- Figur 1: eine schematische Darstellung einer Plattform zur Code-Generierung und Implementierung in einer Hardwareumgebung;
- Figur 2: ein Flussdiagramm zur Veranschaulichung eines Verfahrens zum Durchführen einer Speicherplanung und einer Code-Generierung; und
- Figuren 3a und 3b: eine Gegenüberstellung einer bisherigen und erfindungsgemäßen Vorgehensweise zur Platzierung von Speicherbereichen für Modellparameter in einem Arbeitsspeicher einer Hardwareumgebung.

### Beschreibung von Ausführungsformen

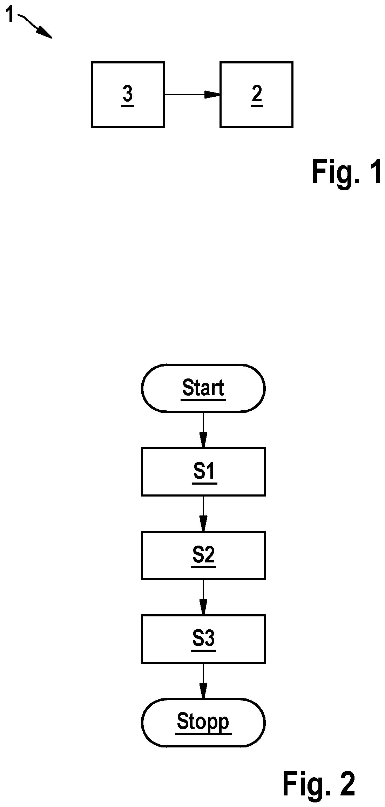

Figur 1 zeigt ein Blockdiagramm einer Plattform 1 zur Durchführung einer Code-Generierung und Implementieren eines generierten Programmcodes in einer Hardwareumgebung 2. Die Hardwareumgebung entspricht z.B. einem Steuergerät mit einem Microcontroller, Mikroprozessor oder dergleichen. Die Code-Generierung erfolgt auf einem herkömmlichen Computer 3 oder Workstation unter Vorgabe der Konfiguration eines neuronalen Netzes. Der Computer 3 ist eingerichtet, eine Speicherplanung und eine Code-Generierung durchzuführen, wobei die Speicherplanung zunächst für die einzelnen Berechnungsschritte des neuronalen Netzes eine Platzierung von Speicherbereichen zur Aufnahme mindestens eines Eingangsdatenblockes, eines Ausgangsdatenblockes und mindestens eines Modellparameterblocks durchführt. Der Modellparameterblock umfasst alle Modellparameter, die für die Berechnung des jeweiligen Berechnungsschrittes benötigt werden, z.B. Gewichtungen, Bias-Werte einer Fully-Connected-Schicht.

Ist der Code generiert, wird dieser an die Hardwareumgebung 2 übertragen und dort implementiert bzw. ausgeführt.

In Figur 2 ist ein Flussdiagramm zur Veranschaulichung eines Verfahrens zur Durchführung einer Speicherplanung und einer Code-Generierung zum Bereitstellen eines Programmcodes zum Implementieren eines neuronalen Netzes dargestellt.

In Schritt S1 wird zunächst das neuronale Netz mit den Berechnungsschritten vorgegeben. Die Berechnungsschritte definieren jeweils die Art der zu berechnenden Schicht des neuronalen Netzes, den Eingangsdatenblock und den resultierenden Ausgangsdatenblock. Für die Netzwerkschichten können weiterhin Modellparameter vorgegeben sein, die je nach Art der Netzwerkschicht zur Berechnung der Datenelemente des Ausgangsdatenblocks aus den Datenelementen des Eingangsdatenblocks verwendet werden.

In Schritt S2 wird eine Speicherplanung, z.B. mit einem SMT Planer, durchgeführt, bei der sukzessive durch die Berechnungsschritte iteriert wird und für jeden Berechnungsschritt eine Platzierung des Eingangsdatenblocks und des Ausgangsdatenblocks sowie des Modellparameterblocks für die Modellparameter vornimmt. Die Speicherplanung entspricht vorzugsweise einem an sich bekannten kombinatorischen Optimierungsverfahren.

Jede der Berechnungsschritte erfordert in der Regel das Vorab-Bereitstellen des Eingangsdatenblocks und ggf. des Modellparameterblocks sowie der Reservierung des Speicherbereichs für den Ausgangsdatenblock. Häufig werden der Eingangsdatenblock und der Modellparameterblocks durch Kopieroperationen aus einem Datenspeicher in den Arbeitsspeicher geladen, da die Verarbeitung der Eingangsdatenblöcke, der Ausgangsdatenblöcke und des Modellparameterblocks nur aus dem Arbeitsspeicher heraus erfolgen kann.

Die Speicherplanung sieht dabei vor, für eine Anzahl von einem oder mehreren aufeinanderfolgenden Berechnungsschritten die benötigten Modellparameterblöcke zu bündeln und diese mit einer einzigen Kopieroperation in einen zusammenhängenden Speicherbereich (zusammenhängender Adressbereich) hineinzukopieren, so dass der zeitliche Overhead bei einer Kopieroperation minimiert werden kann.

Insbesondere kann vorgesehen sein, dass die Kopieroperation neben den Modellparametern der aktuellen betrachteten Berechnungsschicht auch für den nächsten Berechnungsschritt zu kopierende Eingangsdatenblöcke in der gleichen Kopieroperation mit kopiert und so in einer Kopieroperation einen Eingangsdatenblock sowie einen oder mehrere Modellparameterblöcke als zusammenhängenden Speicherbereich in den Arbeitsspeicher kopiert.

Anschließend wird in Schritt S3 während der Code-Generierung nur eine Speicheroperation /Kopieroperation für das Kopieren des zusammenhängenden Speicherbereichs vorgesehen, während voneinander beabstandet gespeicherte Modellparameterblöcke mit separaten Kopiervorgängen in den Arbeitsspeicher kopiert werden.

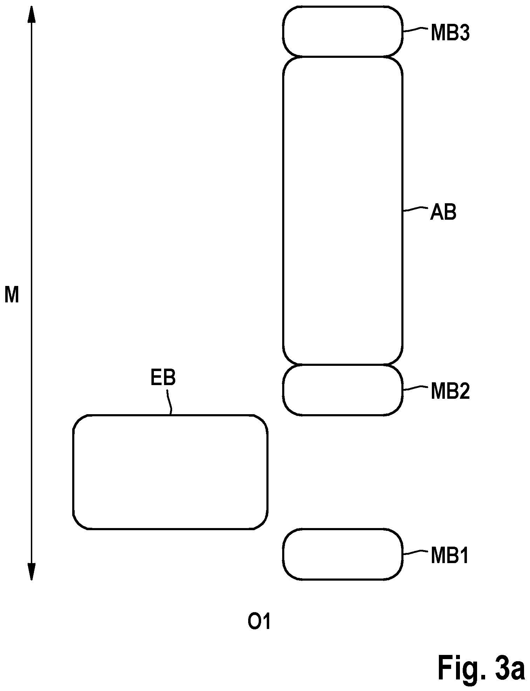

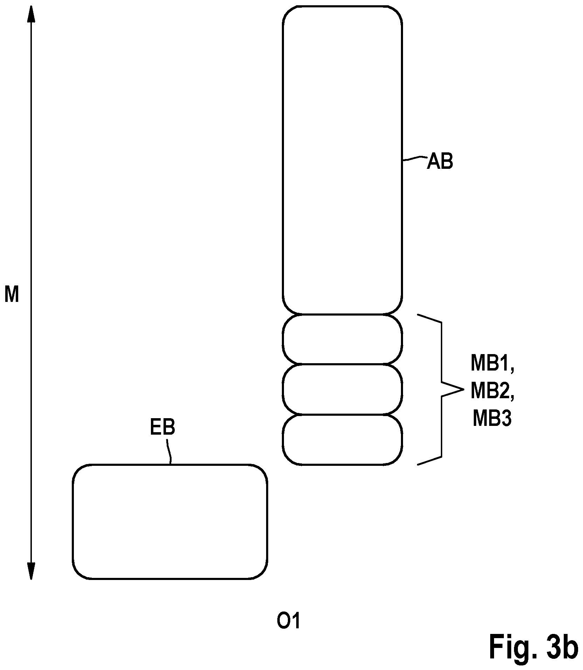

In den Figuren 3a und 3b ist in einer Gegenüberstellung das Ergebnis der Speicherplanung in einem herkömmlichen Verfahren bzw. dem oben beschriebenen Verfahren dargestellt. Figur 3a zeigt wie Modellparameter in mehreren Modellparameterblöcken MB1, MB2, MB3 an separate voneinander beabstandete Speicherbereiche kopiert werden, die den Ausgangsdatenblock AB des betreffenden Berechnungsschritts umgeben, wie es bei herkömmlichen Speicherplanungsverfahren resultiert.

In Figur 3b ist dagegen dargestellt, dass die Modellparameterblöcke MB1, MB2, MB3 in einer einzigen Kopieroperation in den Arbeitsspeicher hineinkopiert werden.

Zur Optimierung der Bearbeitungszeit, die für Kopieroperationen verwendet wird, kann ein Speicherkopienzähler verwendet werden. Dieser kann die benötigten Kopieroperationen zählen oder zählen, wenn ein Modellparameterblock MB eines bestimmten Berechnungsschritts nicht an einen anderen Modellparameterblock MB1, MB2, MB3 anschließt und dadurch nicht in einer einzigen Kopieroperation kopiert werden kann. Beim Finden einer optimalen Speicherplanung kann der SMT Planer die Anzahl der Kopieroperationen minimieren oder in einer Zielfunktion die Minimierung der Anzahl der benötigten Speicheroperationen berücksichtigen.

## Patentansprüche

1. Computer-implementiertes Verfahren zum Durchführen einer Speicherplanung für eine Code-Generierung zur Bestimmung eines Codes für die Berechnung eines neuronalen Netzes in einer Hardwareumgebung (2), mit folgenden Schritten:
- Bereitstellen (S1) von aufeinanderfolgenden Berechnungsschritten von Schichten des neuronalen Netzes, wobei für jeden Berechnungsschritt (01) die Größe eines Eingangsdatenblocks (EB), eines Ausgangsdatenblocks (AB) und, abhängig von der Art des Berechnungsschritts, eines oder mehrerer Modellparameterblöcke (MB1, MB2, MB3) bestimmt ist, wobei der eine oder die mehreren Modellparameterblöcke (MB1, MB2, MB3) Modellparameter für einen jeweiligen Berechnungsschritt aufweisen,
- Ermitteln einer Regel für die Speicherplanung für jeden bestimmten Berechnungsschritt, der die Verwendung von Modellparametern benötigt, wobei die Regel angibt, dass die Modellparameter in einen zusammenhängenden Speicherbereich in einen Arbeitsspeicher der Hardwareumgebung (2) geladen werden;
- Durchführen (S2) einer Speicherplanung, in der für jeden Berechnungsschritt der Speicherbereich des jeweiligen Eingangsdatenblocks (EB), Ausgangsdatenblocks (AB) und Modellparameterblocks (MB1, MB2, MB3) im Arbeitsspeicher festgelegt wird, unter Berücksichtigung der ermittelten Regeln.

2. Verfahren nach Anspruch 1, wobei das Durchführen der Speicherplanung das Anwenden eines Optimierungsverfahrens umfasst, bei der die Zielfunktion eine Minimierung der Anzahl der Speicheroperationen berücksichtigt.

3. Verfahren nach Anspruch 1 oder 2, wobei das Durchführen der Speicherplanung das Anwenden eines Optimierungsverfahrens umfasst, bei der die Zielfunktion eine Minimierung des Gesamtspeicherbedarfs im Arbeitsspeicher berücksichtigt.

4. Verfahren nach einem der Ansprüche 1 bis 3, wobei nach der Speicherplanung eine Code-Generierung durchgeführt wird (S3), bei die Modellparameter in einer einzigen Kopieroperation in den Speicherbereich, der durch die Speicherplanung dem Modellparameterblock (MB1, MB2, MB3) zugewiesen wurden, geladen werden.

5. Vorrichtung zur Durchführung eines der Verfahren nach einem der Ansprüche 1 bis 4.

6. Computerprogrammprodukt, umfassend Befehle, die bei der Ausführung des Programms durch mindestens eine Datenverarbeitungseinrichtung diese veranlassen, die Schritte des Verfahrens nach einem der Ansprüche 1 bis 4 auszuführen.

7. Maschinenlesbares Speichermedium, umfassend Befehle, die bei der Ausführung durch mindestens eine Datenverarbeitungseinrichtung diese veranlassen, die Schritte des Verfahrens nach einem der Ansprüche 1 bis 4 auszuführen.

## Geänderte Patentansprüche

### Geänderte Patentansprüche gemäss Regel 137(2) EPÜ.

1. Computer-implementiertes Verfahren zum Durchführen einer Speicherplanung für eine Code-Generierung zur Bestimmung eines Codes für die Berechnung eines neuronalen Netzes in einer Hardwareumgebung (2), mit folgenden Schritten:
- Bereitstellen (S1) von aufeinanderfolgenden Berechnungsschritten von Schichten des neuronalen Netzes, wobei für jeden Berechnungsschritt (O1) die Größe eines Eingangsdatenblocks (EB), eines Ausgangsdatenblocks (AB) und, abhängig von der Art des Berechnungsschritts, eines oder mehrerer Modellparameterblöcke (MB1, MB2, MB3) bestimmt ist, wobei der eine oder die mehreren Modellparameterblöcke (MB1, MB2, MB3) Modellparameter für einen jeweiligen Berechnungsschritt aufweisen,
- Ermitteln einer Regel für die Speicherplanung für jeden bestimmten Berechnungsschritt, der die Verwendung von Modellparametern benötigt, wobei die Regel angibt, dass die Modellparameter in einen zusammenhängenden Speicherbereich in einen Arbeitsspeicher der Hardwareumgebung (2) geladen werden;
- Durchführen (S2) einer Speicherplanung, in der für jeden Berechnungsschritt der Speicherbereich des jeweiligen Eingangsdatenblocks (EB), Ausgangsdatenblocks (AB) und Modellparameterblocks (MB1, MB2, MB3) im Arbeitsspeicher festgelegt wird, unter Berücksichtigung der ermittelten Regeln,
- Durchführen (S3) einer Code-Generierung nach der Speicherplanung, wobei die Modellparameter in einer einzigen Kopieroperation in den Speicherbereich, der durch die Speicherplanung dem Modellparameterblock (MB1, MB2, MB3) zugewiesen wurden, geladen werden.

2. Verfahren nach Anspruch 1, wobei das Durchführen der Speicherplanung das Anwenden eines Optimierungsverfahrens umfasst, bei der die Zielfunktion eine Minimierung der Anzahl der Speicheroperationen berücksichtigt.

3. Verfahren nach Anspruch 1 oder 2, wobei das Durchführen der Speicherplanung das Anwenden eines Optimierungsverfahrens umfasst, bei der die Zielfunktion eine Minimierung des Gesamtspeicherbedarfs im Arbeitsspeicher berücksichtigt.

4. Vorrichtung zur Durchführung eines der Verfahren nach einem der Ansprüche 1 bis 3.

5. Computerprogrammprodukt, umfassend Befehle, die bei der Ausführung des Programms durch mindestens eine Datenverarbeitungseinrichtung diese veranlassen, die Schritte des Verfahrens nach einem der Ansprüche 1 bis 3 auszuführen.

6. Maschinenlesbares Speichermedium, umfassend Befehle, die bei der Ausführung durch mindestens eine Datenverarbeitungseinrichtung diese veranlassen, die Schritte des Verfahrens nach einem der Ansprüche 1 bis 3 auszuführen.
